# EUROPEAN PATENT SPECIFICATION

(11) **EP 2 755 440 B1**
(45) Date of publication and mention of the grant of the patent: **28.03.2018**
(21) Application number: 13000204.1
(22) Date of filing: 15.01.2013
(51) Int. Cl.: H04W 84/00

(54) **Establishing wireless communication between a train and base stations**
Herstellen einer drahtlosen Kommunikation zwischen einem Zug und Basisstationen
Établir une communication sans fil entre un train et des stations de base

(43) Date of publication of application: 16.07.2014
(73) Proprietor: Swisscom AG, 3050 Bern (CH)
(72) Inventor: Zasowski, Thomas, 8053 Zuerich (CH)
(74) Representative: Rentsch Partner AG

(56) References cited:
- WO-A1-2011/038783
- WO-A1-2011/050840
- GB-A- 2 426 665

## Description

### Field of the Invention

The present invention relates to a system and a method for establishing wireless communication between a train and base stations. Specifically, the present invention relates to a communication system and a communication method for establishing wireless communication between a train and one or more base stations of a mobile radio network which are arranged along a track travelled by the train, particularly a high speed train.

### Background of the Invention

The wide spread use of mobile communication devices for wireless data communication has made it a great challenge for manufacturers and operators of telecommunications networks to provide wireless data communication with sufficient bandwidth and broadband capacity. Particularly on trains, where typically a large number of users attempt to use broadband data communication services simultaneously through the same limited number of base stations in reach of the train, it is very difficult to provide sufficient data communication capacity for a passing train. Moreover, the tremendous increase of the speed of trains has augmented this problem as data communication resources need to be provided very quickly, with great bandwidth and broadband capacity, and for very short periods of time.

CN 101980458 describes a mobile communication system for high speed trains. Specifically, CN 101980458 describes an arrangement of communication relays between base stations and mobile users. According to CN 101980458, the communication relays are set up on top of the train to reduce attenuation by the body of the train.

CN102014084 discloses a method for estimating channel state information of communication channels between a stationary base station and a station mounted on a high-speed train. According to CN102014084, the channel estimation is based on the speed and location of the train.

GB 2 426 665 discloses transmitting signals between a network element and a mobile terminal via a mobile relay, wherein the transmission power of the mobile relay is variable. The power is controlled according to geographical location of the mobile relay and may take into account transmission power of network elements and other mobile relays.

### Summary of the Invention

It is an object of this invention to provide a communication system and a communication method for establishing wireless communication between a train and one or more base stations arranged along a track travelled by the train, which communication system and a communication method do not have at least some of the disadvantages of the prior art. In particular, it is an object of the present invention to provide a communication system and a communication method for establishing wireless broadband data communication between a moving train and base stations arranged along the track travelled by the train.

According to the present invention, these objects are achieved through the features of the independent claims. In addition, further advantageous embodiments follow from the dependent claims and the description.

According to the present invention, the above-mentioned objects are particularly achieved in that for establishing wireless communication between a train and one or more base stations arranged along a track travelled by the train, communication channels are set up between one or more antennas of communication relays on the train and one or more antennas of the base stations. At a communication relay at the head of the train, channel state information (CSI) is determined and stored in a data store, and the CSI is used by communication relays located further back on the train for communicating via the communication channels, depending on information defining the current location of the communication relays. CSI is inherently location-specific and time-dependent. For a given position in space CSI changes gradually over time. The rate of change and thus the time over which a channel/CSI may be considered essentially constant is a channel parameter sometimes referred to as the channel coherence time. Hence, over a certain time interval given by the channel coherence time, a channel/CSI may be considered constant for a specific point in space.

Using CSI makes it possible to reduce processing time and signalling overhead required for measuring the CSI, as the CSI needs to be determined only once in a certain period of time, e.g. at a communication relay at the head of the train, and can be reused by communication relays located further back on the train when they subsequently pass the respective location(s) for which the CSI was measured earlier. Thus, the implicit a priori information about the layout of the train track(s) and the moving direction of the train is used to determine the CSI used for communicating via the communication channels of the MIMO array. The position of the train track(s) and the moving direction of the train are essentially deterministic and all antennas of a communication relay observe essentially the same communication channel at the same absolute position in space, over a certain time period. For example, if communication relays or antennas on the train are aligned in a row and spaced at 10m from each other, the second communication relay or antenna from the front of the train observers the same communication channel with the same CSI as the first communication relay or antenna at the front of the train, after the train has moved 10m or after 10/v seconds, if v is the speed in m/s, respectively. Consequently, the CSI measured for the communication relay or antenna at the front of the train in moving direction can be propagated to the communication relays or antennas arranged further back on the train.

In an embodiment, a Multiple-Input and Multiple-Output (MIMO) array is established which includes at least two communication relays arranged on the train and one or more of the base stations, and communication is executed concurrently via multiple communication channels of the MIMO array using cooperative communication schemes, each communication channel being set up between one of the communication relays and one of the base stations included in the MIMO array.

Using MIMO arrays and cooperative communication schemes in the non-static, dynamically changing environment of moving trains and stationary base stations makes it possible to increase communication bandwidth (capacity) and/or to improve the robustness of signal transmission (reliability) by transmitting segments of a signal via different communication channels of the MIMO array or by transmitting concurrently an identical signal on multiple communication channels of the MIMO array, for example.

Depending on the embodiment, the CSI is determined by performing a CSI measurement in the communication relay arranged in front position in moving direction of the train or by performing a CSI measurement in a base station associated with a communication channel that includes the communication relay arranged in front position in moving direction of the train. Alternatively, the CSI is retrieved from a database associated with the track travelled by the train.

In an embodiment, the CSI used for communicating via the communication channels of the MIMO array is determined depending on information about the speed of the train and information about relative positions of the communication relays on the train.

Depending on the embodiment, the following cooperative communication schemes are used for communicating via the communication channels of the MIMO array: implementing spatial diversity by transmitting concurrently an identical signal on all the communication channels of the MIMO array, and/or implementing spatial multiplexing by transmitting segments of the signal via different communication channels of the MIMO array.

In an embodiment, the CSI, information about the speed of the train, and/or information about relative positions of the communication relays on the train is transmitted from the train to the base stations.

In a further embodiment, the communication relays are arranged on the train, such that the communication relays travel essentially through a same path in space when the train travels on the track. For example, the communication relays are arranged on top of the train, centred with respect to both sides of the train, one or more equally spaced communication relays per train coach.

In addition to a communication system and a communication method for establishing wireless communication between a train and one or more base stations arranged along a track travelled by the train, the present invention also relates to a computer program product comprising a computer-readable storage medium having stored thereon computer code which is configured to direct a processor arranged on a train to perform the steps of setting up communication channels between one or more antennas of communication relays arranged on the train and one or more antennas of base stations arranged along a track travelled by the train, determining and storing CSI in a data store, and communicating via the communication channels using the CSI for the communication channels, depending on information defining the current location of the communication relays.

### Brief Description of the Drawings

The present invention will be explained in more detail, by way of example, with reference to the drawings in which:
- Figure 1a:: shows a block diagram illustrating schematically a top view of a moving train including a number of coaches with communication relays.
- Figure 1b:: shows a block diagram illustrating schematically a side view of the moving train and communication channels established between the communication relay mounted on the first coach at the front of the train and antennas of a stationary base station.
- Figure 1c:: shows a block diagram illustrating schematically a side view of the moving train, at a time where the second coach from the front of the train is at the same position depicted in Figure 1b for the first coach at the front of the train.
- Figure 2:: shows a block diagram illustrating an exemplary configuration of a communication system for establishing wireless communication between a train and a plurality of base stations arranged along a track travelled by the train.
- Figures 3a-3d:: show block diagrams illustrating schematically top views of a moving train at different times where the train has advanced from one Figure to the next by one coach such that corresponding communication channels are established between stationary base stations and the coaches that consecutively pass by the base stations.
- Figures 4a-4d:: show block diagrams illustrating schematically top views of a moving train at different times where the train has advanced from one Figure to the next by one coach such that corresponding communication channels are established between antennas of a stationary base station and antennas on coaches that consecutively pass by the base station.
- Figure 5:: shows a flow diagram illustrating an exemplary sequence of steps for establishing wireless communication between a train and a plurality of base stations arranged along a track travelled by the train.
- Figure 6:: shows graphs illustrating schematically the change over time of the CSI of communication channels established between a stationary base station and antennas of communication relays on a train passing by the base station.

### Detailed Description of the Preferred Embodiments

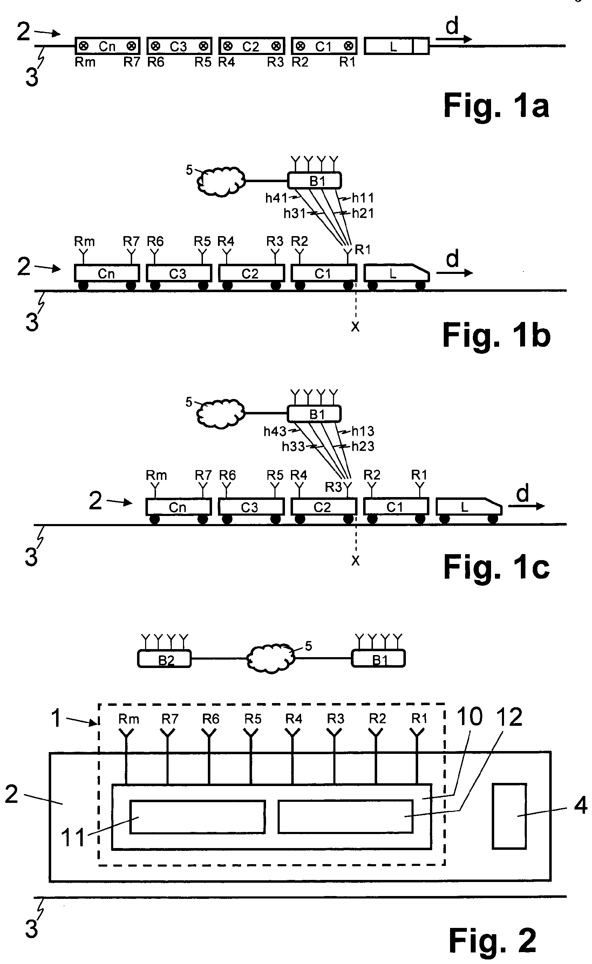

In Figures 1a, 1b, 1c, 2, 3a, 3b, 3c, 3d, 4a, 4b, 4c, and 4d, reference numeral 2 refers to a train, particularly - but not exclusively - a high speed train configured to move at speeds at or above 200 km/h. The train 2 includes one or more locomotives L coupled to one or more carts or coaches C1, C2, C3, C4, Cn (short: C1-Cn). As indicated schematically in Figures 1a, 1b, 1c, 2, 3a, 3b, 3c, 3d, 4a, 4b, 4c, and 4d the train 2 moves in moving direction d, along a track 3, e.g. on railways including a set of rails or a monorail, by way of wheels and/or magnetic levitation.

In Figures 1b, 1c, 2, 3a, 3b, 3c, 3d, 4a, 4b, 4c, and 4d the reference numerals B1, B2 refer to base stations of a mobile radio network 5 such as an LTE or LTE-Advanced network (Long Term Evolution), a GSM-network (Global System for Mobile communication), a UMTS-network (Universal Mobile Telephone System) or another cellular telephone or data network for wireless communication. Depending on embodiment and configuration, each of the base stations B1, B2 has one or more antennas.

In Figure 2, reference numeral 1 refers to a communication system arranged in/on the train 2. The communication system 1 comprises one or more operable computers, including one or more processors, configured to establish wireless communication between the train 2 and base stations B1, B2 arranged along the track 3 travelled by the train 2, thereby enabling a mobile communication device 4 located in the train 2 to communicate via the mobile radio network 5 with other communication units.

The communication system 1 comprises several communication relays R1, R2, R3, R4, R5, R6, R7, R8, R9, Rm (short: R1-Rm), each including one or more antennas, as is illustrated in Figures 1a, 1b, 1c, 2, 3a, 3b, 3c, 3d, 4a, 4b, 4c, and 4d. The communication relays R1-Rm are configured to establish communication channels between the communication relays R1-Rm and the base stations B1 and/or B2. The communication relays R1-Rm are interconnected by way of a wired or wireless communication link, e.g. through WLAN, Ethernet, Power Line communication, UMTS, LTE, etc. The communication relays R1-Rm or their antennas, respectively, are arranged with known respective (geometric) distance to each other. In some instances, the individual communication relays R1-Rm or defined subsets of the communication relays R1-Rm are arranged at equal distances to each other. The communication relays R1-Rm or their antennas, respectively, are arranged such that they travel essentially through the same path in space (in all three dimensions) when the train travels on the track 3 during a train ride. For example, the communication relays R1-Rm are mounted at the same height with respect to the tracks 3, on top of the train 2, one or more communication relays R1-Rm per coach or cart C1-Cn, and centred with respect to both sides of the train 2, as illustrated in the top view of Figure 1a. In an embodiment, a further communication relay is installed on the locomotive L.

In Figure 2, reference numeral 4 refers to a mobile communication device configured to communicate wirelessly in the mobile radio network 5 via base stations B1, B2, e.g. a mobile telephone, a smart phone, a tablet or notebook computer, or a PDA-computer (Personal Digital Assistant). If the mobile communication device 4 is located in the train 2, communication via the mobile radio network 5 is enabled by the communication relays R1-Rm through communication channels established with the base stations B1, B2.

As is further illustrated in Figure 2, the communication system 1 comprises several functional modules, including at least one communication unit 10, at least one channel estimator 11, and at least one data store 12. In accordance with various embodiments, the functional modules are implemented as programmed software modules. One skilled in the art will understand, however, that in alternative embodiments, the functional modules can be implemented fully or partly by way of hardware components. The data store 12 comprises data storage modules for storing data, as outlined below. The computer program code of the software modules is included in a computer program product, e.g. stored on a computer readable medium, either in memory integrated in a computer of the communication system 1 or on a tangible data carrier which can be inserted into or connected to a computer of the communication system 1. The computer program code of the software modules controls the computer(s) or processor(s), respectively, of the communication system 1 so that the computer of the communication system 1 executes various functions described later in more detail.

The channel estimator 11 is configured to determine and store in the data store 12 (location-specific) channel state information (CSI). The CSI relates to the channel properties of communication channels between the communication relays R1-Rm and the base stations B1, B2. Specifically, the CSI describes how a signal propagates via the respective communication channel from a transmitter to a receiver and represents the combined effect of, for example, scattering, fading, and power decay with distance. The CSI for a communication channel between a communication relay R1-Rm and a base station B1, B2 is location-specific in that it indicates the channel properties of the communication channel for a given location of the respective communication relay R1-Rm, e.g. a given location along the track 3 travelled by the train 2, defining a position or location with regards to the base station B1, B2. The CSI makes it possible to adapt transmissions to current and/or estimated future channel conditions. Because the communication relays R1-Rm or their antennas, respectively, are arranged on the train 2 to travel through the same path in space, for any location on that path, the same CSI can be used for communication channels established between a communication relay R1-Rm at that respective location and a base station B1, B2 along the tracks 3.

In the example shown in Figure 1b, there are four communication channels h11, h21, h31, h41 illustrated between the antennas of base station B1 and communication relay R1. Accordingly, in this scenario, the CSI describes the channel properties of each of these communication channels h11, h21, h31, h41. In the example of Figure 1c, the train 2 has moved by a distance of one coach or cart C1-Cn in moving direction d with respect to the position of the train 2 shown in Figure 1b, i.e. at the time of the snap shot depicted in Figure 1c, the second coach C2 from the front of the train 2 is at the same position X as the first coach C1 at the front of the train 2, at the time of the snap shot depicted in Figure 1b. Consequently, at the position X of the train 2 shown in Figure 1c, the CSI of the communication channels h13, h23, h33, h43 between the antennas of base station B1 and the antennas of communication relay R3 corresponds to the CSI of the communication channels h11, h21, h31, h41 between the antennas of base station B1 and the antennas of communication relay R3, at the position of the train 2 shown in Figure 1b for some period of time, which is sometimes referred to as channel coherence time. Consequently, CSI determined for a communication channel established through a communication relay R1 at the front of the train 2 at a position X can be used for communication channels established through communication relays R2-Rm farther back in the train 2 when these rear communication relays R2-Rm pass through the same position X. The time or position when the measured and/or estimated (location-specific) CSI applies to a rear communication relay R2-Rm on the train 2 depends on information defining the current location of these communication relays R2-Rm. For example, the current location of the communication relays R2-Rm is defined by information defining the position of the communication relays R1-Rm relative to each other, e.g. the relative distance, and the speed of the train 2.

In accordance with various embodiments, the channel estimator 11 is configured to determine the CSI for a communication channel h11, h21, h31, h41 by performing a CSI measurement in the communication relay R1 arranged in front position in moving direction d of the train 2. Alternatively, the CSI is measured by a base station B1, B2, e.g. the base station B1 included in the communication channel h11, h21, h31, h41 with the communication relay R1 arranged in front position of the train 2, and the channel estimator 11 receives the CSI from the base station B1, B2.

The CSI measurement is performed at the communication relay R1 or respective base station B1 using known measurement methods, e.g. by transmitting a known signal, a so-called training or pilot sequence, and estimating the CSI using the combined knowledge of the transmitted and received signal. In an embodiment, where the CSI is determined through measurements in communication relays R1 of the train, the channel estimator 11 is further configured to transmit the determined CSI to the respective base stations B1, B2 and the rear communication relays R2-Rm.

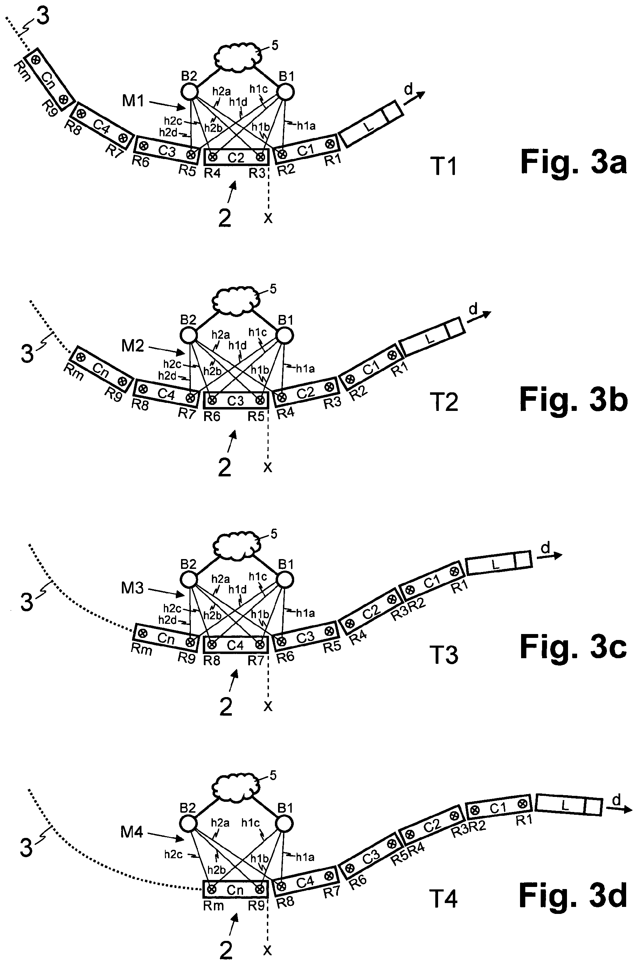

The communication unit 10 is connected to the communication relays R1-Rm via wired or wireless communication links, e.g. through WLAN, Ethernet, Power Line communication, UMTS, LTE, etc. In an embodiment, the communication unit 10 is implemented as a cooperative communication unit 10 which is configured to establish a virtual Multiple-Input and Multiple-Output (MIMO) array, including antennas of at least two of the communication relays R1-Rm and one or more of the base stations B1, B2. In Figures 3a, 3b, 3c, 3d, the reference numerals M1, M2, M3, M4 (short: M1-M4) refer to examples of a (virtual) MIMO array, including in each case the base stations B1 and B2 and four (three) of the communication relays R2-Rm, as outlined in Table 1.

**Table 1**

| MIMO **M1** | | |
|---|---|---|
| | **B1** | **B2** |
| **R2** | h1a | h2a |
| **R3** | h1a | h2b |
| **R4** | h1a | h2c |
| **R5** | h1d | h2d |

| MIMO **M2** | | |
|---|---|---|
| | **B1** | **B2** |
| **R4** | h1a | h2a |
| **R5** | h1b | h2b |
| **R6** | h1c | h2c |
| **R7** | h1d | h2d |

| MIMO **M3** | | |
|---|---|---|
| | **B1** | **B2** |
| **R6** | h1a | h2a |
| **R7** | h1b | h2b |
| **R8** | h1c | h2c |
| **R9** | h1d | h2d |

| MIMO **M4** | | |
|---|---|---|
| | **B1** | **B2** |
| **R8** | h1a | h2a |
| **R9** | h1b | h2b |
| **Rm** | h1c | h2c |

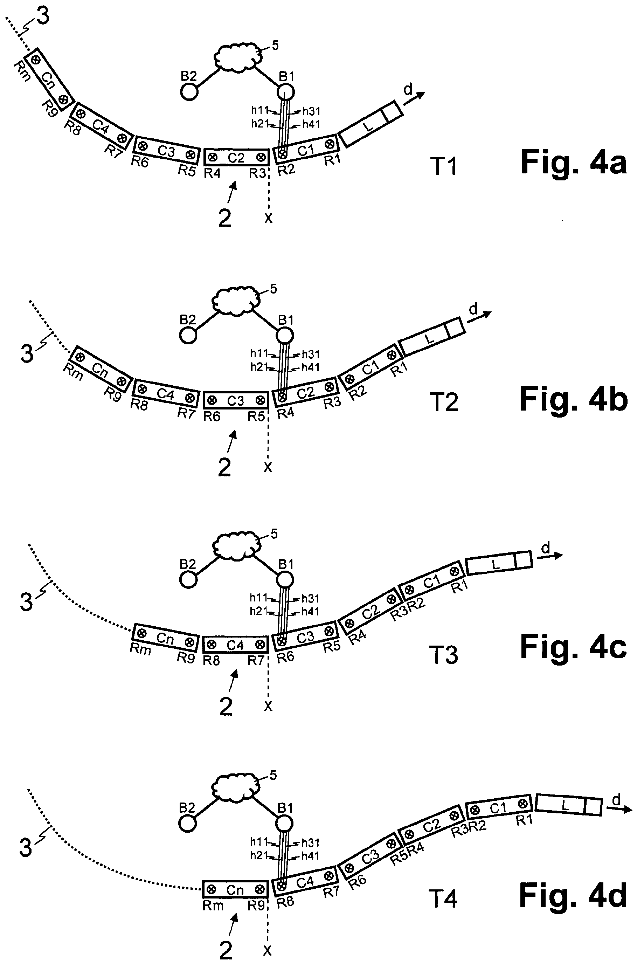

In the scenario depicted in Figures 3a, 3b, 3c, 3d, 4a, 4b, 4c, and 4d, the train 2 is illustrated at times T1, T2, T3, and T4 (short T1-T4) when the train 2 has advanced in moving direction d by the length Ic of one coach or cart C1-Cn. Depending on the speed v of the train 2 and the length Ic of a cart C1-Cn, the duration of time Ti between consecutive points in time T1-T4 is defined by Ti=lc/v. Assuming a constant speed of the train 2, the points in time T1-T4 are at regular intervals Ti=T4-T3=T3-T2=T2-T1.

In the duration of time Ti, the train 2 moves forward such that, at time t, a second cart C2 takes the place that a first cart C1, arranged adjacent in front of the second cart C2, occupied at the time t-Ti, whereby, at the time t, the communication relays R3, R4 or antennas of the second cart C2 are at the same position as the communication relays R1-R2 or antennas of the first cart C1 were before, at time t-T1 .

As illustrated in Figures 3a, 3b, 3c, 3d, at each of the points in time T1-T4, MIMO arrays M1-M4 are established between the base stations B1, B2 and e.g. four communication relays {R2, R3, R4, R5}, {R4, R5, R6, R7}, {R6, R7, R8, R9}, {R8, R9, Rm}. As the subsets of communication relays {R2, R3, R4, R5}, {R4, R5, R6, R7}, {R6, R7, R8, R9}, {R8, R9, Rm} included in the MIMO arrays M1-M4 are in the same absolute positions, the communication channels h1a, h1b, h1c, h1d, h2a, h2b, h2c, h2d (short: h1a-h2d) established between the communication relays {R2, R3, R4, R5}, {R4, R5, R6, R7}, {R6, R7, R8, R9}, {R8, R9, Rm} and the base stations B1, B2 included in the MIMO arrays M1-M4 are essentially the same. For example, the CSI of the communication channel h1a established at T1 between the base station B1 and communication relay R2 corresponds essentially to the CSI of the communication channel h1a established at T2, T3, or T4 between the base station B1 and the communication relays R4, R6, or R8, respectively.

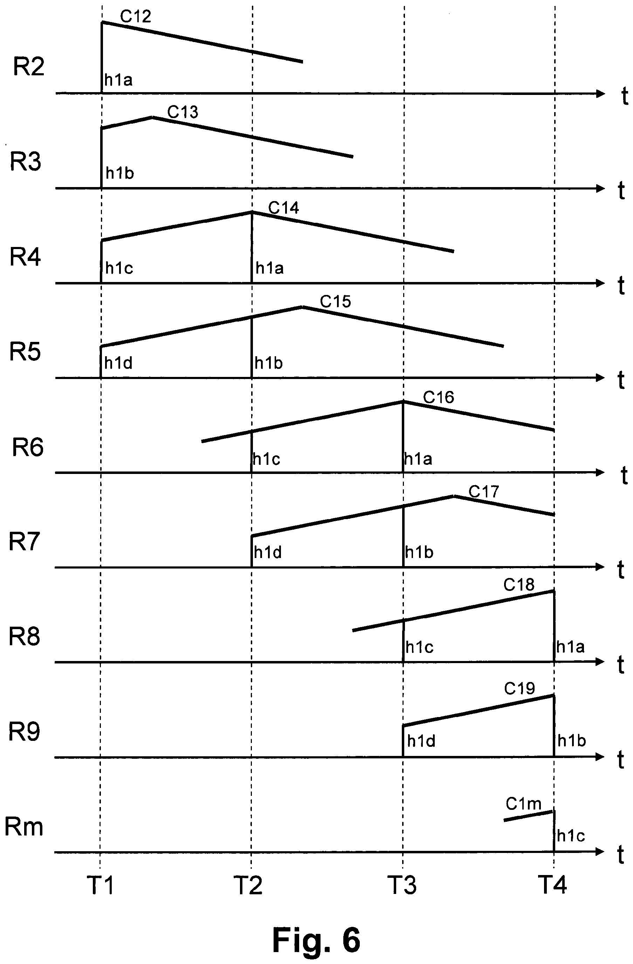

Figure 6 illustrates schematically, for a time window of t=T1 to t=T4, the continuous temporal change of the CSI C12, C13, C14, C15, C16, C17, C18, C19, C1m (short: C12-C1m) for communication channels established between the communication relays R2-Rm and base station B1, as the train 2, and thus the communication relays R2-Rm, pass by the base station B1 on the same path. In Figure 6, the reference numerals h1a, h1b, h1c, h1d indicate schematically that at the points in time T1, T2, T3, T4, the CSI C12-C1m corresponds to the CSI of the communication channels h1a, h1b, h1c, h1 d illustrated in the corresponding snap shots of Figures 3a, 3b, 3c, and 3d. As is illustrated in Figure 6, the same CSI C12-C1 m is used for the communication channels established between a communication relay R1-Rm and base station B1, but shifted in time determined by the speed of the train 2 and the distance between the communication relays R1-Rm.

The cooperative communication unit 10 is further configured to communicate concurrently via multiple communication channels h1a-h2d of the MIMO array M1-M4 using cooperative communication schemes. Depending on the embodiment and/or configuration, the cooperative communication unit 10 is configured to use and implement as cooperative communication scheme spatial diversity, by transmitting concurrently an identical signal on all the communication channels h1a-h2d of the MIMO array M1-M4, or spatial multiplexing, by transmitting segments of the signal via different communication channels h1a-h2d of the MIMO array M1-M4. One skilled in the art will understand that other cooperative communication schemes are applicable without deviating from the scope of the claims.

Figures 4a, 4b, 4c, and 4d illustrate the set up of communication channels h11, h21, h31, h41 between one or more antennas (e.g. four) of a communication relay R2, R4, R6, R8 and one or more antennas (e.g. four) of a particular base station B1 when the train 2 has advanced in moving direction d by the length Ic of one coach or cart C1-Cn, and the same CSI applies to the communication channels h11, h21, h31, h41. Specifically, the CSI of the communication channels h11, h21, h31, h41 established at T1 between the base station B1 and communication relay R2 corresponds to the CSI of the communication channels, h111, h21, h31, h41 established at T2, T3, or T4 between the base station B1 and the communication relays R4, R6, or R8, respectively. For this scenario, the communication unit 10 is configured to use corresponding CSI for communicating via the one or more communication channels h11, h21, h31, h41 between a communication relay R2, R4, R6, R8 and the same particular base station B1 when the respective communication relays R2, R4, R6, R8 have the same relative position with respect to that particular base station B1 at times T1, T2, T3, T4. Thus, without using any cooperative communication schemes, the communication unit 10 uses the same CSI for the communication channels h11, h21, h31, h41 established between the same base station B1 and different communication relays R2, R4, R6, R8.

In order to communicate via the communication channels h11, h21, h31, h41 between the antennas of communication relays R1-Rm and base stations B1, B2 and/or for using cooperative communication schemes for multiple communication channels h1a-h2c of a MIMO array M1-M4, the base stations B1, B2 and communication relays R1-Rm require the CSI of all the communication channels h11, h21, h31, h41, and h1a-h2d between the transceivers involved in the communication, i.e. the communication channels h11, h21, h31, h41, and h1a-h2d established in each case between an antenna of one of the base stations B1, B2 and an antenna of one of the communication relays R1-Rm. Depending on the embodiment, the (cooperative) communication unit 10 and/or the base stations B1, B2 are thus configured to exchange the respective CSI.

Moreover, the communication unit 10 is configured to transmit to the base stations B1, B2 information about the current speed of the train 2 and the relative positions of the communication relays R1-Rm.

One skilled in the art will understand, that depending on the embodiment, there is one or more than one communication unit 10 arranged in the train 2. If there is more than one communication unit 10, there may be one unit per cart C1-Cn, one unit per logical group of communication relays R1-Rm (e.g. the communication relays R1-Rm of two adjacent carts C1-Cn), or one unit per communication relay R1-Rm, for example. If there are multiple communication units 10 they are configured to cooperate and communicate via wireless or wired communication channels, e.g. through WLAN, Ethernet, Power Line communication, UMTS, LTE, etc. Likewise, the base stations B1, B2 may controlled by one central processing unit, one processing unit per logical group of base stations B1, B2, or one processing unit per base station B1, B2, whereby in case of multiple processing units, they are preferably interconnected to improve the overall system performance.

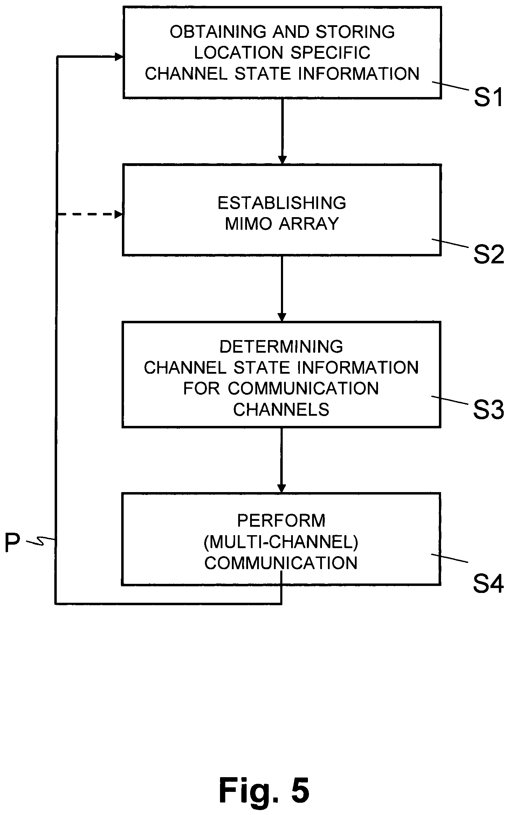

In the following paragraphs, described with reference to Figure 5 are possible sequences of steps performed by the functional modules for establishing wireless communication between the train 2 and a plurality of base stations B1, B2 arranged along the track 3 travelled by the train 2.

In step S1, the channel estimator 11 determines and stores (location-specific) CSI. In one embodiment, the channel estimator 11 determines and stores CSI for the communication channels set up by the communication relay R1 at the front of the train 2 using real-time CSI measurements, performed by the communication relay R1 at the front of the train 2 or by the base stations B1, B2 included in the communication channels set up by the communication relay R1 at the front of the train 2. In an alternative embodiment, the channel estimator 11 obtains from a CSI database (pre-measured, historic) CSI for the track 3 or a section of the track 3. The CSI database is stored in a centralized computer system remote from the train 2 or in local database or lookup table on the train 2.

In step S2, for the scenario depicted in Figures 3a, 3b, 3c, and 3d, the communication unit 10 establishes MIMO arrays for cooperative communication through a plurality of channels. In Figures 3a, 3b, 3c, and 3d this is illustrated schematically for MIMO arrays M1-M4 including the base stations B1 and B2 and the communication relays R2-Rm when they pass these base stations B1, B2. However, this is a simplified scenario, in reality, the communication unit 10 establishes concurrently multiple MIMO arrays between the communication relays R1-Rm of the train 2 and the plurality of base stations B1, B2 arranged along the track 3 travelled by the train 2 and within communication range, e.g. within communication range of a defined minimum communication quality. For the scenario depicted in Figures 4a, 4b, 4c, and 4d, the communication unit 10 neither establishes MIMO arrays nor uses cooperative communication schemes, but merely sets up communication channels h11, h21, h31, h41 between the antennas of a base station B1 and the antennas of communication relays R2, R4, R6, R8 on the cart C1, C2, C3, C4 passing the respective base station B1.

In step S3, for the scenario depicted in Figures 3a, 3b, 3c, and 3d, the channel estimator 11 determines CSI for the communication channels h1a-h2c of the established MIMO arrays M1-M4. For the scenario depicted in Figures 4a, 4b, 4c, and 4d, the channel estimator 11 determines CSI for the communication channels h11,h21, h31, h41 set up between the antennas of a base station B1 and the antennas of the communication relay R2, R4, R6, R8 arranged on a cart C1, C2, C3, C4 passing the respective base station B1. Using stored CSI, the CSI for the communication channels h11, h21, h31, h41, and h1a-h2d is determined based on the location or position of the communication relay R2-Rm included in the respective communication channel h11, h21, h31, h41, and h1a-h2d. As outlined above, the location or position of the communication relays R2-Rm is defined by their relative arrangement on the train 2, e.g. their distance from the communication relay R1 at the front of the train 2 in moving direction d, and the speed of the train 2. One skilled in the art will understand, that there various mechanisms to propagate the CSI measured, in step S1, at the front of the train 2, from the communication relay R1 to the communication relays R2-Rm further back on the train 2, e.g. through data pulling or pushing functions performed by a channel estimator 1 1 arranged in the communication relay R1 at the front of the train 2 (push), in a centralized communication unit 10 of the train (push and/or pull), or in the communication relays R2-Rm located further back on the train 2 (pull).

In the alternative embodiment, where the CSI is retrieved from a CSI database, the location of the communication relays R1-Rm may be determined further based on the current location of the train 2 as provided by a positioning system, such as GPS (Global Positioning System), or the mobile radio network 5.

In step S4, the communication unit 10 uses the CSI determined for the communication channels h11, h21, h31, h41, and h1a-h2d, or for the communication relays R1-Rm, respectively, for communicating through the communication channels and, for the scenario depicted in Figures 3a, 3b, 3c, and 3d, for performing cooperative communication through the communication channels of the MIMO arrays M1-M4.

As indicated by reference numeral P in Figure 5, processing continues by continuously or periodically repeating steps S1 to S4 or S2 to S4, depending on whether CSI is determined in step S1 through real-time measurements or retrieval of stored CSI from a CSI database or lookup table.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

## Claims

1. A communication method of establishing wireless communication between a train (2) and one or more base stations (B1, B2) arranged along a track (3) travelled by the train (2), the method comprising:
setting up communication channels (h1 1, h21, h31, h41) between one or more antennas of communication relays (R1, R2, R3, R4, R5, R6, R7, R8, R9, Rm) arranged on the train (2) and one or more antennas of the base stations (B1, B2);
determining and storing (S1) in a data store (12) channel state information of one or more of the set up communication channels (h11, h21, h31, h41) associated with one or more of the antennas of a communication relay (R1) arranged at the head of the train (2), wherein the head of the train is defined in moving direction of the train; and
retrieving from the data store (12) and using the retrieved channel state information for communicating via the communication channels (h11, h21, h31, h41) between one or more antennas of communication relays (R2, R3, R4, R5, R6, R7, R8, R9, Rm) arranged further back on the train (2) than the one or more antennas of the communication relay (R1) arranged at the head of the train (2) and the one or more antennas of the base stations (B1, B2), depending on information defining the current location of the communication
relays (R2, R3, R4, R5, R6, R7, R8, R9, Rm) arranged further back on the train (2).

2. The communication method of claim 1, further comprising establishing (S2) a Multiple-Input and Multiple-Output array (M1, M2, M3, M4) including at least two communication relays (R1, R2, R3, R4, R5, R6, R7, R8, R9, Rm) arranged on the train (2) and one or more of the base stations (B1, B2); and communicating (S4) concurrently via multiple communication channels (h1a, h1b, h1c, h1d, h2a, h2b, h2c, h2d) of the Multiple-Input and Multiple-Output array (M1, M2, M3, M4) using cooperative communication schemes, each communication channel being set up between one of the communication relays (R1, R2, R3, R4, R5, R6, R7, R8, R9, Rm) and one of the base stations (B1, B2) included in the Multiple-Input and Multiple-Output array (M1, M2, M3, M4).

3. The communication method of one of claims 1 or 2, wherein determining the channel state information includes one of: performing a channel state information measurement in the communication relay (R1) arranged in front position in moving direction (d) of the train (2), and performing a channel state information measurement in a base station (B1, B2) associated with a communication channel (h1a, h1b, h1c, h1d) that includes the communication relay (R1) arranged in front position in moving direction (d) of the train (2).

4. The communication method of one of claims 1 to 3, wherein the channel state information used for communicating via the communication channels (h11, h21, h31, h41, h1a, h1b, h1c, h1d, h2a, h2b, h2c, h2d) is determined (S3) depending on information about the speed of the train (2) and information about relative positions of the communication relays (R1, R2, R3, R4, R5, R6, R7, R8, R9, Rm) on the train (2).

5. The communication method of one of claims 2 to 4, wherein at least one of the following cooperative communication schemes is used for communicating (S4) via the communication channels (h1a, h1b, h1c, h1d, h2a, h2b, h2c, h2d) of the Multiple-Input and Multiple-Output array (M1, M2, M3, M4): implementing spatial diversity by transmitting concurrently an identical signal on all the communication channels (h1a, h1b, h1c, h1d, h2a, h2b, h2c, h2d) of the Multiple-Input and Multiple-Output array (M1, M2, M3, M4), and implementing spatial multiplexing by transmitting segments of the signal via different communication channels (h1a, h1b, h1c, h1d, h2a, h2b, h2c, h2d) of the Multiple-Input and Multiple-Output array (M1, M2, M3, M4).

6. The communication method of one of claims 1 to 5, further comprising transmitting from the train (2) to the base stations (B1, B2) at least one of: the channel state information, information about the speed of the train (2), and information about relative positions of the communication relays (R1, R2, R3, R4, R5, R6, R7, R8, R9, Rm) on the train (2).

7. The communication method of one of claims 1 to 6, further comprising arranging the communication relays (R1, R2, R3, R4, R5, R6, R7, R8, R9, Rm) on the train (2), such that the communication relays (R1, R2, R3, R4, R5, R6, R7, R8, R9, Rm) travel essentially through a same path in space when the train (2) travels on the track (3).

8. A communication system (1) for establishing wireless communication between a train (2) and one or more base stations (B1, B2) arranged along a track (3) travelled by the train (2), the communication system (1) comprising:
a plurality of communication relays (R1, R2, R3, R4, R5, R6, R7, R8, R9, Rm) arranged on the train (2), wherein the communication system (1) further comprises:
a communication unit (10) connected to the communication relays (R1, R2, R3, R4, R5, R6, R7, R8, R9, Rm) via communication links and configured to set up communication channels (h11, h21, h31, h41) between one or more antennas of the communication relays (R1, R2, R3, R4, R5, R6, R7, R8, R9, Rm) and one or more antennas of the base stations (B1, B2);
a channel estimator (11) configured to determine and store in a data store (12) channel state information of one or more of the set up communication channels (h11, h21, h31, h41) associated with one or more of the antennas of a communication relay (R1) arranged at the head of the train (2), wherein the head of the train is defined in moving direction of the train;
the communication unit (10) being further configured to retrieve from the data store (12) and use the retrieved channel state information for communicating via the communication channels (h11, h21, h31, h41) between one or more antennas of communication relays (R2, R3, R4, R5, R6, R7, R8, R9, Rm) arranged further back on the train (2) than the one or more antennas of the communication relay (R1) arranged at the head of the train (2) and the one or more antennas of the base stations (B1, B2), depending on information defining the current location of the communication relays (R2, R3, R4, R5, R6, R7, R8, R9, Rm) arranged further back on the train (2).

9. The communication system (1) of claim 8, wherein the communication unit (10) is further configured to establish a Multiple-Input and Multiple-Output array (M1, M2, M3, M4) including at least two of the communication relays (R2, R3, R4, R5, R6, R7, R8, R9, Rm) and one or more of the base stations (B1, B2), and to communicate concurrently via multiple communication channels (h1a, h1b, h1c, h1d, h2a, h2b, h2c, h2d) of the Multiple-Input and Multiple-Output array (M1, M2, M3, M4) using cooperative communication schemes, each communication channel being set up between one of the communication relays (R1, R2, R3, R4, R5, R6, R7, R8, R9, Rm) and one of the base stations (B1, B2) included in the Multiple-Input and Multiple-Output array (M1, M2, M3, M4).

10. The communication system (1) of one of claims 8 or 9, wherein the channel estimator (11) is configured to determine the channel state information through one of the following ways: performing a channel state information measurement in the communication relay (R1) arranged in front position in moving direction (d) of the train (2), and performing a channel state information measurement in a base station (B1, B2) associated with a communication channel (h1a, h1b, h1c, h1d) that includes the communication relay (R1) arranged in front position in moving direction (d) of the train (2).

11. The communication system (1) of one of claims 8 to 10, wherein the channel estimator (11) is configured to determine the channel state information used for communicating via the communication channels (h11, h21, h31, h41, h1a, h1b, h1c, h2a, h2b, h2c) depending on information about the speed of the train (2) and information about relative positions of the communication relays (R1, R2, R3, R4, R5, R6, R7, R8, R9, Rm) on the train (2).

12. The communication system (1) of one of claims 8 to 11, wherein the communication unit (10) is configured to use at least one of the following cooperative communication schemes for communicating via the communication channels (h1a, h1b, h1c, h1d, h2a, h2b, h2c, h2d) of the Multiple-Input and Multiple-Output array (M1, M2, M3, M4): implementing spatial diversity by transmitting concurrently an identical signal on all the communication channels (h1a, h1b, h1c, h1d, h2a, h2b, h2c, h2d) of the Multiple-Input and Multiple-Output array (M1, M2, M3, M4), and implementing spatial multiplexing by transmitting segments of the signal via different communication channels (h1a, h1b, h1c, h1d, h2a, h2b, h2c, h2d) of the Multiple-Input and Multiple-Output array (M1, M2, M3, M4).

13. The communication system (1) of one of claims 8 to 12, wherein the channel estimator (11) is further configured to transmit to the base stations (B1, B2) at least one of: the channel state information, information about the speed of the train (2), and information about relative positions of the communication relays (R1, R2, R3, R4, R5, R6, R7, R8, R9, Rm) on the train (2).

14. The communication system (1) of one of claims 8 to 13, wherein the communication relays (R1, R2, R3, R4, R5, R6, R7, R8, R9, Rm) are arranged on the train (2), such that the communication relays (R1, R2, R3, R4, R5, R6, R7, R8, R9, Rm) travel essentially through a same path in space when the train (2) travels on the track (3).

15. A computer program product comprising a computer-readable storage medium having stored thereon computer code which is configured to direct a processor arranged on a train (2) to perform the following steps:
setting up communication channels (h1a, h1b, h1c, h2a, h2b, h2c) between one or more antennas of communication relays (R1, R2, R3, R4, R5, R6, R7, R8, R9, Rm) arranged on the train (2) and one or more antennas of base stations (B1, B2) arranged along a track (3) travelled by the train (2);
determining and storing (S1) in a data store (12) channel state information of one or more of the set up communication channels (h11, h21, h31, h41) associated with one or more of the antennas of a communication relay (R1) arranged at the head of the train (2), wherein the head of the train is defined in moving direction of the train; and
retrieving from the data store (12) and using the retrieved channel state information for communicating via the communication channels (h11, h21, h31, h41) between one or more antennas of communication relays (R2, R3, R4, R5, R6, R7, R8, R9, Rm) arranged further back on the train (2) than the one or more antennas of the communication relay (R1) arranged at the head of the train (2) and the one or more antennas of the base stations (B1, B2), depending on information defining the current location of the communication
relays (R2, R3, R4, R5, R6, R7, R8, R9, Rm) arranged further back on the train (2).

16. The computer program product of claim 15, comprising further program code which is configured to direct the processor arranged on the train (2) to perform all the steps of the method of one of the claims 2 to 7.

## Patentansprüche

1. Kommunikationsverfahren zum Errichten einer drahtlosen Kommunikation zwischen einem Schienenfahrzeug (2) und einer oder mehreren Basisstationen (B1, B2), die entlang eines Gleises (3) angeordnet sind, das von dem Schienenfahrzeug (2) befahren wird, wobei das Verfahren Folgendes umfasst:
Errichten von Kommunikationskanälen (h11, h21, h31, h41) zwischen einer oder mehreren Antennen von Kommunikationsrelais (R1, R2, R3, R4, R5, R6, R7, R8, R9, Rm), die auf dem Schienenfahrzeug (2) angeordnet sind, und einer oder mehreren Antennen der Basisstationen (B1, B2);
Ermitteln und Speichern (S1) in einem Datenspeicher (12) von Kanalzustandsinformationen eines oder mehrerer der eingerichteten Kommunikationskanäle (h11, h21, h31, h41), die einer oder mehreren Antennen eines Kommunikationsrelais (R1) zugeordnet sind, das an dem Kopf des Schienenfahrzeugs (2) angeordnet ist, wobei der Kopf des Schienenfahrzeugs in Bewegungsrichtung des Schienenfahrzeugs definiert ist; und
Abrufen von Kanalzustandsinformationen von dem Datenspeicher (12) und Verwenden der abgerufenen Kanalzustandsinformationen, um über die Kommunikationskanäle (h11, h21, h31, h41) zwischen einer oder mehreren Antennen von Kommunikationsrelais (R2, R3, R4, R5, R6, R7, R8, R9, Rm), die auf dem Schienenfahrzeug (2) weiter hinten angeordnet sind als die eine oder die mehreren Antennen des Kommunikationsrelais (R1), das an dem Kopf des Schienenfahrzeugs (2) angeordnet ist, und der einen oder den mehreren Antennen der Basisstationen (B1, B2) in Abhängigkeit von Informationen zu kommunizieren, die den aktuellen Ort der Kommunikationsrelais (R2, R3, R4, R5, R6, R7, R8, R9, Rm) definieren, die auf dem Schienenfahrzeug (2) weiter hinten angeordnet sind.

2. Kommunikationsverfahren nach Anspruch 1, ferner umfassend: Erstellen (S2) einer mehrere Eingänge und mehrere Ausgänge aufweisenden (Multiple-Input-Multiple-Output, MIMO)-Matrix (M1, M2, M3, M4), die mindestens zwei Kommunikationsrelais (R1, R2, R3, R4, R5, R6, R7, R8, R9, Rm) aufweist, die auf dem Schienenfahrzeug (2) und einer oder mehreren der Basisstationen (B1, B2) angeordnet sind; und paralleles Kommunizieren (S4) über mehrere Kommunikationskanäle (h1a, h1b, h1c, h1d, h2a, h2b, h2c, h2d) der MIMO-Matrix (M1, M2, M3, M4) mittels zusammenwirkender Kommunikationskonfigurationen, wobei jeder Kommunikationskanal zwischen einem der Kommunikationsrelais (R1, R2, R3, R4, R5, R6, R7, R8, R9, Rm) und einer der Basisstationen (B1, B2), die in der MIMO-Matrix (M1, M2, M3, M4) enthalten sind, errichtet wird.

3. Kommunikationsverfahren nach einem der Ansprüche 1 oder 2, wobei das Ermitteln der Kanalzustandsinformationen eines von Folgendem umfasst: Durchführen einer Kanalzustandsinformationsmessung in dem Kommunikationsrelais (R1), das in Bewegungsrichtung (d) des Schienenfahrzeugs (2) an einer vorderen Position angeordnet ist, und Durchführen einer Kanalzustandsinformationsmessung in einer Basisstation (B1, B2), die einen Kommunikationskanal (h1a, h1b, h1c, h1d) zugeordnet ist, der das Kommunikationsrelais (R1) aufweist, das in Bewegungsrichtung (d) des Schienenfahrzeugs (2) an einer vorderen Position angeordnet ist.

4. Kommunikationsverfahren nach einem der Ansprüche 1 bis 3, wobei die Kanalzustandsinformationen, die zur Kommunikation über die Kommunikationskanäle (h11, h21, h31, h41, h1a, h1b, h1c, h1d, h2a, h2b, h2c, h2d) genutzt werden, in Abhängigkeit von Informationen über die Geschwindigkeit des Schienenfahrzeugs (2) und von Informationen über relative Positionen der Kommunikationsrelais (R1, R2, R3, R4, R5, R6, R7, R8, R9, Rm) auf dem Schienenfahrzeug (2) ermittelt werden (S3) .

5. Kommunikationsverfahren nach einem der Ansprüche 2 bis 4, wobei wenigstens eine der folgenden zusammenwirkenden Kommunikationskonfigurationen verwendet wird, um über die Kommunikationskanäle (h1a, h1b, h1c, h1d, h2a, h2b, h2c, h2d) der MIMO-Matrix (M1, M2, M3, M4) zu kommunizieren (54): Implementieren einer räumlichen Diversität durch paralleles Senden eines identischen Signals auf sämtlichen Kommunikationskanälen (h1a, h1b, h1c, h1d, h2a, h2b, h2c, h2d) der MIMO-Matrix (M1, M2, M3, M4); und Implementieren eines räumlichen Multiplexens durch Senden von Segmenten des Signals über unterschiedliche Kommunikationskanäle (h1a, h1b, h1c, h1d, h2a, h2b, h2c, h2d) der MIMO-Matrix (M1, M2, M3, M4).

6. Kommunikationsverfahren nach einem der Ansprüche 1 bis 5, ferner mit dem Schritt eines Sendens wenigstens eines von Folgendem von dem Schienenfahrzeug (2) zu den Basisstationen (B1, B2):
Kanalzustandsinformationen, Informationen über die Geschwindigkeit des Schienenfahrzeugs (2) und/oder Informationen über relative Positionen der Kommunikationsrelais (R1, R2, R3, R4, R5, R6, R7, R8, R9, Rm) auf dem Schienenfahrzeug (2).

7. Kommunikationsverfahren nach einem der Ansprüche 1 bis 6, ferner mit dem Schritt eines Anordnens der Kommunikationsrelais (R1, R2, R3, R4, R5, R6, R7, R8, R9, Rm) auf dem Schienenfahrzeug (2), so dass sich die Kommunikationsrelais (R1, R2, R3, R4, R5, R6, R7, R8, R9, Rm) im Wesentlichen auf einem gleichen Pfad im Raum bewegen, wenn das Schienenfahrzeug (2) auf dem Gleis (3) fährt.

8. Kommunikationssystem (1) zum Errichten einer drahtlosen Kommunikation zwischen einem Schienenfahrzeug (2) und einer oder mehreren Basisstationen (B1, 82), die entlang eines Gleises (3) angeordnet sind, das von dem Schienenfahrzeug (2) befahren wird, wobei das Kommunikationssystem (1) aufweist:
mehrere Kommunikationsrelais (R1, R2, R3, R4, R5, R6, R7, R8, R9, Rm), die auf dem Schienenfahrzeug (2) angeordnet sind, wobei das Kommunikationssystem (1) ferner enthält:
eine Kommunikationseinheit (10), die über Kommunikationskanäle mit den Kommunikationsrelais (R1, R2, R3, R4, R5, R6, R7, R8, R9, Rm) verbunden sind und dazu eingerichtet sind, Kommunikationskanäle (h11, h21, h31, h41) zwischen einer oder mehreren Antennen der Kommunikationsrelais (R1, R2, R3, R4, R5, R6, R7, R8, R9, Rm) und einer oder mehreren Antennen der Basisstationen (B1, B2) zu errichten;
einen Kanaleinschätzer (11), der dazu eingerichtet ist, Kanalzustandsinformationen eines oder mehrerer der eingerichteten Kommunikationskanäle (h11, h21, h31, h41) zu ermitteln und in einem Datenspeicher (12) zu speichern, die einer oder mehreren Antennen eines Kommunikationsrelais (R1) zugeordnet sind, das an dem Kopf des Schienenfahrzeuges (2) angeordnet ist, wobei der Kopf des Schienenfahrzeugs in Bewegungsrichtung des Schienenfahrzeugs definiert ist;
wobei die Kommunikationseinheit (10) ferner dafür ausgelegt ist, Kanalzustandsinformationen von dem Datenspeicher (12) abzurufen und die abgerufenen Kanalzustandsinformationen zu verwenden, um über die Kommunikationskanäle (h11, h21, h31, h41) zwischen einer oder mehreren Antennen von Kommunikationsrelais (R2, R3, R4, R5, R6, R7, R8, R9, Rm), die auf dem Schienenfahrzeug (2) weiter hinten angeordnet sind als die eine oder die mehreren Antennen des Kommunikationsrelais (R1), die an dem Kopf des Schienenfahrzeugs (2) angeordnet sind, und der einen oder den mehreren Antennen der Basisstationen (B1, B2) in Abhängigkeit von Informationen zu kommunizieren, die den aktuellen Ort der Kommunikationsrelais (R2, R3, R4, R5, R6, R7, R8, R9, Rm) definieren, die auf dem Schienenfahrzeug (2) weiter hinten angeordnet sind.

9. Kommunikationssystem (1) nach Anspruch 8, wobei die Kommunikationseinheit (10) dafür ausgelegt ist, eine mehrere Eingänge und mehrere Ausgänge aufweisende (Multiple-Input-Multiple-Output, MIMO)-Matrix (M1, M2, M3, M4), die mindestens zwei der Kommunikationsrelais (R2, R3, R4, R5, R6, R7, R8, R9, Rm) und eine oder mehrere der Basisstationen (B1, B2) aufweist, zu errichten und mittels zusammenwirkender Kommunikationskonfigurationen parallel über mehrere Kommunikationskanäle (h1a, h1b, h1c, h1d, h2a, h2b, h2c, h2d) der MIMO-Matrix (M1, M2, M3, M4) zu kommunizieren, wobei jeder Kommunikationskanal zwischen einem der Kommunikationsrelais (R1, R2, R3, R4, R5, R6, R7, R8, R9, Rm) und einer der Basisstationen (B1, B2), die in der MIMO-Matrix (M1, M2, M3, M4) enthalten sind, errichtet wird.

10. Kommunikationssystem (1) nach einem der Ansprüche 8 oder 9, wobei der Kanaleinschätzer (11) dazu eingerichtet ist, die Kanalzustandsinformationen auf einem der folgenden Wege zu ermitteln: Durchführen einer Kanalzustandsinformationsmessung in dem Kommunikationsrelais (R1), das in Bewegungsrichtung (d) des Schienenfahrzeugs (2) an einer vorderen Position angeordnet ist; und Durchführen einer Kanalzustandsinformationsmessung in einer Basisstation (B1, B2), die einem Kommunikationskanal (h1a, h1b, h1c, h1d) zugeordnet ist, der das Kommunikationsrelais (R1) aufweist, das in Bewegungsrichtung (d) des Schienenfahrzeugs (2) an einer vorderen Position angeordnet ist.

11. Kommunikationssystem (1) nach einem der Ansprüche 8 bis 10, wobei der Kanaleinschätzer (11) dazu eingerichtet ist, die Kanalzustandsinformationen zu ermitteln, die genutzt werden, um in Abhängigkeit von Informationen über die Geschwindigkeit des Schienenfahrzeugs (2) und von Informationen über relative Positionen der Kommunikationsrelais (R1, R2, R3, R4, R5, R6, R7, R8, R9, Rm) auf dem Schienenfahrzeug (2) über die Kommunikationskanäle (h11, h21, h31, h41, h1a, h1b, h1c, h2a, h2b, h2c) zu kommunizieren.

12. Kommunikationssystem (1) nach einem der Ansprüche 8 bis 11, wobei die Kommunikationseinheit (10) dazu eingerichtet ist, mindestens eine der folgenden zusammenwirkenden Kommunikationskonfigurationen zu verwenden, um über die Kommunikationskanäle (h1a, h1b, h1c, h1d, h2a, h2b, h2c, h2d) der MIMO-Matrix (M1, M2, M3, M4) zu kommunizieren: Implementieren einer räumlichen Diversität durch paralleles Senden eines identischen Signals auf sämtlichen Kommunikationskanälen (h1a, h1b, h1c, h2a, h2b, h2c, h2d) der MIMO-Matrix (M1, M2, M3, M4) und Implementieren eines räumlichen Multiplexens von Segmenten des Signals über unterschiedliche Kommunikationskanäle (h1a, h1b, h1c, h1d, h2a, h2b, h2c, h2d) der MIMO-Matrix (M1, M2, M3, M4).

13. Kommunikationssystem (1) nach einem der Ansprüche 8 bis 12 wobei der Kanaleinschätzer (11) ferner konfiguriert ist, zu den Basisstationen (B1, B2) wenigstens eines von Folgendem zu senden: die Kanalzustandsinformationen, Informationen über die Geschwindigkeit des Schienenfahrzeugs (2) und Informationen über relative Positionen der Kommunikationsrelais (R1, R2, R3, R4, R5, R6, R7, R8, R9, Rm) auf dem Schienenfahrzeug (2).

14. Kommunikationssystem (1) nach einem der Ansprüche 8 bis 13, wobei die Kommunikationsrelais (R1, R2, R3, R4, R5, R6, R7, R8, R9, Rm) so auf dem Schienenfahrzeug (2) angeordnet sind, dass sich die Kommunikationsrelais (R1, R2, R3, R4, R5, R6, R7, R8, R9, Rm) räumlich im Wesentlichen auf einem gleichen Pfad bewegen, wenn das Schienenfahrzeug (2) auf dem Gleis (3) fährt.

15. Computerprogrammprodukt, das ein computerlesbares Speichermedium aufweist, auf dem ein Rechnerprogrammcode gespeichert ist, der dazu eingerichtet ist, einen Prozessor, der auf einem Schienenfahrzeug (2) angeordnet ist, zu veranlassen, die folgenden Schritte durchzuführen:
Errichten von Kommunikationskanälen (h1a, h1b, h1c, h2a, h2b, h2c) zwischen einer oder mehreren Antennen von Kommunikationsrelais (R1, R2, R3, R4, R5, R6, R7, R8, R9, Rm), die auf dem Schienenfahrzeug (2) angeordnet sind, und einer oder mehreren Antennen von Basisstationen (B1, B2), die entlang eines Gleises (3) angeordnet sind, das von dem Schienenfahrzeug (2) befahren wird;
Ermitteln und Speichern (S1) in einem Datenspeicher (12) Kanalzustandsinformationen eines oder mehrerer der errichteten Kommunikationskanäle (h11, h21, h31, h41), die einer oder mehreren Antennen eines Kommunikationsrelais (R1) zugeordnet sind, das an dem Kopf des Schienenfahrzeugs (2) angeordnet ist, wobei der Kopf des Schienenfahrzeugs in Bewegungsrichtung des Schienenfahrzeugs definiert ist; und
Abrufen von Kanalzustandsinformationen von dem Datenspeicher (12) und Verwenden der abgerufenen Kanalzustandsinformationen, um über die Kommunikationskanäle (h11, h21, h31, h41) zwischen einer oder mehreren Antennen von Kommunikationsrelais (R2, R3, R4, R5, R6, R7, R8, R9, Rm), die auf dem Schienenfahrzeug (2) weiter hinten als die eine oder die mehreren Antennen des Kommunikationsrelais (R1) angeordnet sind, das an dem Kopf des Schienenfahrzeugs (2) angeordnet ist, und der einen oder den mehreren Antennen der Basisstationen (B1, B2) in Abhängigkeit von Informationen zu kommunizieren, die den aktuellen Ort der Kommunikationsrelais (R2, R3, R4, R5, R6, R7, R8, R9, Rm) definieren, die weiter hinten auf dem Schienenfahrzeug (2) angeordnet sind.

16. Computerprogrammprodukt nach Anspruch 15, das ferner einen Programmcode aufweist, der dazu eingerichtet ist, den Prozessor, der auf dem Schienenfahrzeug (2) angeordnet ist, zu veranlassen, sämtliche Schritte des Verfahrens nach einem der Ansprüche 2 bis 7 durchzuführen.

## Revendications

1. Procédé de communication d'établissement d'une communication sans fil entre un train (2) et un ou plusieurs station(s) de base (B1, B2) agencée(s) le long d'une voie (3) parcourue par le train (2), le procédé comprenant :
l'établissement de canaux de communication (h11, h21, h31, h41) entre une ou plusieurs antenne(s) de relais de communication (R1, R2, R3, R4, R5, R6, R7, R8, R9, Rm) agencés sur le train (2) et une ou plusieurs antenne(s) des stations de base (B1, B2) ;
de détermination et de stockage (S1) dans un magasin de données (12) d'informations d'état de canal de l'un ou plusieurs des canaux de communication établis (h11, h21, h31, h41) associés à une ou plusieurs des antennes d'un relais de communication (R1) agencé à la tête du train (2), dans lequel la tête du train est définie dans la direction de déplacement du train ; et
de récupération à partir du magasin de données (12) et d'utilisation des informations d'état de canal pour communiquer via les canaux de communication (h11, h21, h31, h41) entre une ou plusieurs antenne(s) de relais de communication (R1, R2, R3, R4, R5, R6, R7, R8, R9, Rm) agencés plus en arrière sur le train (2) que les une ou plusieurs antennes du relais de communication (R1) agencé à la tête du train (2) et les une ou plusieurs des antennes des stations de base (B1, B2), en fonction des informations définissant l'emplacement en cours des relais de communication (R1, R2, R3, R4, R5, R6, R7, R8, R9, Rm) agencés plus en arrière sur le train (2).

2. Procédé de communication selon la revendication 1, comprenant en outre l'établissement (S2) d'une série d'entrées multiples et de sorties multiples (M1, M2, M3, M4) incluant au moins deux relais de communication (R1, R2, R3, R4, R5, R6, R7, R8, R9, Rm) agencés sur le train (2) et une ou plusieurs des antennes des stations de base (B1, B2) ; et de communication (S4) simultanément via des canaux de communication multiples (h1a, h1b, h1c, h1d, h2a, h2b, h2c, h2d) de la série d'entrées multiples et de sorties multiples (M1, M2, M3, M4), en utilisant des modèles de communication coopérative, chaque canal de communication étant établi entre un des relais de communication (R1, R2, R3, R4, R5, R6, R7, R8, R9, Rm) et une des stations de base (B1, B2) figurant dans la série d'entrées multiples et de sorties multiples (M1, M2, M3, M4).

3. Procédé de communication selon la revendication 1 ou 2, dans lequel la détermination des informations d'état de canal incluent l'une de : réalisation d'une mesure d'informations d'état de canal dans le relais de communication (R1) agencé en position avant dans la direction de mouvement (d) du train (2), et exécution d'une mesure d'informations d'état de canal dans une station de base (B1, B2) associée à un canal de communication (h1a, h1b, h1c, h1d) qui inclut le relais de communication (R1) agencé en position avant dans la direction de mouvement (d) du train (2).

4. Procédé de communication selon l'une des revendications 1 à 3, dans lequel les informations d'état de canal utilisées pour la communication via les canaux de communication (h11, h21, h31, h41, h1a, h1b, h1c, h1d, h2a, h2b, h2c, h2d) sont déterminées (S3) en fonction des informations relatives à la vitesse du train (2) et des informations relatives à des positions relatives des relais de communication (R1, R2, R3, R4, R5, R6, R7, R8, R9, Rm) sur le train (2) .

5. Procédé de communication selon l'une des revendications 2 à 4, dans lequel au moins un des modèles de communication coopératifs suivants est utilisé pour communiquer (S4) via les canaux de communication (h1a, h1b, h1c, h1d, h2a, h2b, h2c, h2d) de la série d'entrées multiples et de sorties multiples (M1, M2, M3, M4) : mise en oeuvre de la diversité spatiale par la transmission simultanément d'un signal identique sur tous les canaux de communication (h1a, h1b, h1c, h1d, h2a, h2b, h2c, h2d) de la série d'entrées multiples et de sorties multiples (M1, M2, M3, M4), et mise en oeuvre de multiplexage spatial par la transmission de segments du signal via différents canaux de communication (h1a, h1b, h1c, h1d, h2a, h2b, h2c, h2d) de la série d'entrées multiples et de sorties multiples (M1, M2, M3, M4).

6. Procédé de communication selon l'une des revendications 1 à 5, comprenant en outre la transmission du train (2) aux stations de base (B1, B2) d'au moins une de : informations d'état de canal, informations relatives à la vitesse du train (2) et informations relatives à des positions relatives des relais de communication (R1, R2, R3, R4, R5, R6, R7, R8, R9, Rm) sur le train (2).

7. Procédé de communication selon l'une des revendications 1 à 6, comprenant en outre l'agencement des relais de communication (R1, R2, R3, R4, R5, R6, R7, R8, R9, Rm) sur le train (2) de telle façon que les relais de communication (R1, R2, R3, R4, R5, R6, R7, R8, R9, Rm) voyagent essentiellement à travers un même trajet dans l'espace lorsque le train (2) voyage sur la voie (3).

8. Système de communication pour établir une communication sans fil entre un train (2) et un ou plusieurs station(s) de base (B1, B2) agencée(s) le long d'une voie (3) parcourue par le train (2), le système de communication (1) comprenant :
une pluralité de relais de communication (R1, R2, R3, R4, R5, R6, R7, R8, R9, Rm) agencés sur le train (2), dans lequel le système de communication (1) comprend en outre ;
une unité de communication (10) connectée aux relais de communication (R1, R2, R3, R4, R5, R6, R7, R8, R9, Rm) par des liens de communication et configurée pour établir des canaux de communication (h11, h21, h31, h41) entre une ou plusieurs des antennes des relais de communication (R1, R2, R3, R4, R5, R6, R7, R8, R9, Rm) et une ou plusieurs des antennes des stations de base (B1, B2) ;
un estimateur de canal (11) configuré pour déterminer et stocker dans un magasin de données (12), des informations d'état de canal de l'un ou plusieurs des canaux de communication établis (h11, h21, h31, h41) associés à une ou plusieurs des antennes d'un relais de communication (R1) agencé à la tête du train (2), dans lequel la tête du train est définie dans la direction de déplacement du train ;
l'unité de communication (10) étant en outre configurée pour récupérer à partir du magasin de données (12) et utiliser les informations d'état de canal récupérées pour communiquer via les canaux de communication (h11, h21, h31, h41) entre une ou plusieurs antenne(s) de relais de communication (R1, R2, R3, R4, R5, R6, R7, R8, R9, Rm) agencés plus en arrière sur le train (2) que les une ou plusieurs antennes du relais de communication (R1) agencé à la tête du train (2) et les une ou plusieurs des antennes des stations de base (B1, B2), en fonction des informations définissant l'emplacement en cours des relais de communication (R1, R2, R3, R4, R5, R6, R7, R8, R9, Rm) agencés plus en arrière sur le train (2).

9. Système de communication (1) selon la revendication 8, dans lequel l'unité de communication (10) est en outre configurée pour établir une série d'entrées multiples et de sorties multiples (M1, M2, M3, M4) incluant au moins deux relais de communication (R1, R2, R3, R4, R5, R6, R7, R8, R9, Rm) et une ou plusieurs des antennes des stations de base (B1, B2), et pour communiquer simultanément via des canaux de communication multiples (h1a, h1b, h1c, h1d, h2a, h2b, h2c, h2d) de la série d'entrées multiples et de sorties multiples (M1, M2, M3, M4), en utilisant des modèles de communication coopérative, chaque canal de communication étant établi entre un des relais de communication (R1, R2, R3, R4, R5, R6, R7, R8, R9, Rm) et une des stations de base (B1, B2) figurant dans la série d'entrées multiples et de sorties multiples (M1, M2, M3, M4).

10. Système de communication (1) selon la revendication 8 ou 9, dans lequel l'estimateur de canal (11) est configuré pour déterminer les informations d'état de canal par l'une des façons suivantes : réalisation d'une mesure d'informations d'état de canal dans le relais de communication (R1) agencé en position avant dans la direction de mouvement (d) du train (2), et exécution d'une mesure d'informations d'état de canal dans une station de base (B1, B2) associée à un canal de communication (h1a, h1b, h1c, h1d) qui inclut le relais de communication (R1) agencé en position avant dans la direction de mouvement (d) du train (2).

11. Système de communication (1) selon l'une des revendications 8 à 10, dans lequel l'estimateur de canal (11) est configuré pour déterminer les informations d'état de canal utilisées pour la communication via les canaux de communication (h11, h21, h31, h41, h1a, h1b, h1c, h2a, h2b, h2c) en fonction des informations relatives à la vitesse du train (2) et des informations relatives à des positions relatives des relais de communication (R1, R2, R3, R4, R5, R6, R7, R8, R9, Rm) sur le train (2).

12. Système de communication (1) selon l'une des revendications 8 à 11, dans lequel l'unité de communication (10) est configurée pour utiliser au moins un des modèles de communication coopératifs suivants pour communiquer via les canaux de communication (h1a, h1b, h1c, h1d, h2a, h2b, h2c, h2d) de la série d'entrées multiples et de sorties multiples (M1, M2, M3, M4) : mise en oeuvre de la diversité spatiale par la transmission simultanément d'un signal identique sur tous les canaux de communication (h1a, h1b, h1c, h1d, h2a, h2b, h2c, h2d) de la série d'entrées multiples et de sorties multiples (M1, M2, M3, M4), et mise en oeuvre de multiplexage spatial par la transmission de segments du signal via différents canaux de communication (h1a, h1b, h1c, h1d, h2a, h2b, h2c, h2d) de la série d'entrées multiples et de sorties multiples (M1, M2, M3, M4).

13. Système de communication (1) selon l'une des revendications 8 à 12, dans lequel l'estimateur de canal (11) est en outre configuré pour transmettre aux stations de base (B1, B2) d'au moins une de :
informations d'état de canal, informations relatives à la vitesse du train (2) et informations relatives à des positions relatives des relais de communication (R1, R2, R3, R4, R5, R6, R7, R8, R9, Rm) sur le train (2) .

14. Système de communication (1) selon l'une des revendications 8 à 13, dans lequel les relais de communication (R1, R2, R3, R4, R5, R6, R7, R8, R9, Rm) sont agencés sur le train (2) de telle façon que les relais de communication (R1, R2, R3, R4, R5, R6, R7, R8, R9, Rm) voyagent essentiellement à travers un même trajet dans l'espace lorsque le train (2) voyage sur la voie (3).

15. Produit de programme informatique comprenant un support de stockage lisible par ordinateur ayant stocké dessus un code informatique qui est configuré pour diriger un processeur agencé sur un train (2) pour effectuer les étapes suivantes :
établir des canaux de communication (h1a, h1b, h1c, h2a, h2b, h2c) entre une ou plusieurs antenne (s) de relais de communication (R1, R2, R3, R4, R5, R6, R7, R8, R9, Rm) agencés sur le train (2) et une ou plusieurs antenne(s) de stations de base (B1, B2) agencée (s) le long d'une voie (3) parcourue par le train (2) ;
de déterminer et stocker (S1) dans un magasin de données (12) des informations d'état de canal de l'un ou plusieurs des canaux de communication (h11, h21, h31, h41) associés à une ou plusieurs des antennes d'un relais de communication (R1) agencé à la tête du train (2), dans lequel la tête du train est définie dans la direction de déplacement du train ; et
de récupérer à partir du magasin de données (12) et d'utiliser les informations d'état de canal pour communiquer via les canaux de communication (h11, h21, h31, h41) entre une ou plusieurs antenne(s) de relais de communication (R1, R2, R3, R4, R5, R6, R7, R8, R9, Rm) agencés plus en arrière sur le train (2) que les une ou plusieurs antennes du relais de communication (R1) agencé à la tête du train (2) et les une ou plusieurs des antennes des stations de base (B1, B2), en fonction des informations définissant l'emplacement en cours des relais de communication (R1, R2, R3, R4, R5, R6, R7, R8, R9, Rm) agencés plus en arrière sur le train (2).

16. Produit de programme informatique selon la revendication 15, comprenant un code de programme informatique supplémentaire qui est configuré pour diriger le processeur agencé sur le train (2) pour effectuer toutes les étapes suivantes du procédé selon l'une des revendications 2 à 7.
